# FASCICULE DE BREVET EUROPEEN

(11) **EP 0 741 082 B1**
(45) Date de publication et mention de la délivrance du brevet: **22.09.1999**
(21) Numéro de dépôt: 96420157.8
(22) Date de dépôt: 03.05.1996
(51) Int. Cl.: B65D 1/36

(54) **Emballage pour articles de plomberie**
Verpackung für Klempnerartikel
Package for plumbing articles

(30) Priorité: 05.05.1995 FR 9505400
(43) Date de publication de la demande: 06.11.1996
(73) Titulaire: COMAP, F-69008 Lyon (FR)
(72) Inventeur: Wenger, Benoît, 01700 Beynost (FR)
(74) Mandataire: Maureau, Philippe

(56) Documents cités:
- WO-A-91/17097
- US-A- 3 482 682
- US-A- 3 724 654

## Description

L'invention concerne un emballage destiné aux articles de plomberie, tels que les têtes de robinets thermostatiques portant une couronne graduée.

De manière connue, les articles de plomberie sont emballés en sortie de fabrication, dans des boîtes individuelles parallélépipédiques en carton accompagnées d'une notice de montage destiné à l'installateur avec quelques conseils d'emploi plutôt destinés à l'utilisateur. Ces emballages ont pour inconvénients un coût de fabrication relativement élevé, et un maniement peu pratique lorsqu'ils doivent être manipulés en nombre ; de plus, l'article emballé n'est pas visible sauf si on l'extrait de l'emballage, et ainsi il est commercialement utile que la face extérieure de cet emballage comporte un dessin ou une photographie de l'article, ainsi qu'un minimum d'informations sur celui-ci, ce qui en augmente le prix de revient ; en outre, au moment où l'article est monté sur l'appareil qu'il est destiné à équiper (par exemple lorsqu'un robinet thermostatique est monté sur un radiateur), l'emballage de tête est généralement détruit avec les informations qu'il porte, et la notice n'est pas conservée, ce qui entraîne que si l'utilisateur n'est pas l'installateur lui-même, il ne possède aucune information sur les caractéristiques et l'utilisation optimale de l'article.

Le document US-A-3482 682 concerne un emballage pour éléments semi-conducteurs constitué par un plateau comportant des alvéoles dont le fond de chacune est surélevé par rapport au fond du plateau, chaque alvéole étant fermée par un couvercle encliqueté.

L'invention concerne un emballage du type comprenant d'une part un plateau comportant des emplacements de positionnement individuel pour les articles, et d'autre part des coupelles de protection destinées à recouvrir chacune un article et à être fixées sur le plateau aux emplacements de positionnement individuel des articles, caractérisé en ce que chaque emplacement de positionnement individuel d'un article est matérialisé par un creux, ménagé directement dans le plateau, de profil complémentaire de celui d'une extrémité de l'article, tandis que chaque coupelle fixée par son embouchure sur le plateau est tournée du côté opposé au creux de positionnement d'un article et possède un profil complémentaire de celui de l'autre extrémité de l'article.

Grâce au fait que l'emballage selon l'invention est, d'une certaine manière, collectif, le maniement en nombre des articles emballés et protégés est facilité.

De plus, grâce à cette structure, selon une caractéristique de l'invention, l'emballage peut être au moins partiellement en matériau synthétique, ce qui lui confère un faible prix de revient.

Lorsque, selon une caractéristique de l'invention, les coupelles sont transparentes, les articles peuvent être vus sans être sortis de l'emballage.

Comme le plateau peut aisément être rendu sécable, l'emballage collectif peut alors être scindé en emballages élémentaires individuels ou même en emballages collectifs pour un plus petit nombre d'articles, à volonté.

D'autres caractéristiques et avantages de l'invention ressortiront de la description qui va suivre d'une forme de réalisation de l'invention donnée à titre d'exemple non limitatif et illustrée par les dessins ci-joints dans lesquels :
- la figure 1 est une représentation schématique en perspective 〈〈explosée〉〉 d'une partie des constituants d'un emballage selon l'invention, et
- la figure 2 est une représentation en perspective d'un article de plomberie auquel est destinée la forme de réalisation de l'invention illustrée par la figure 1.

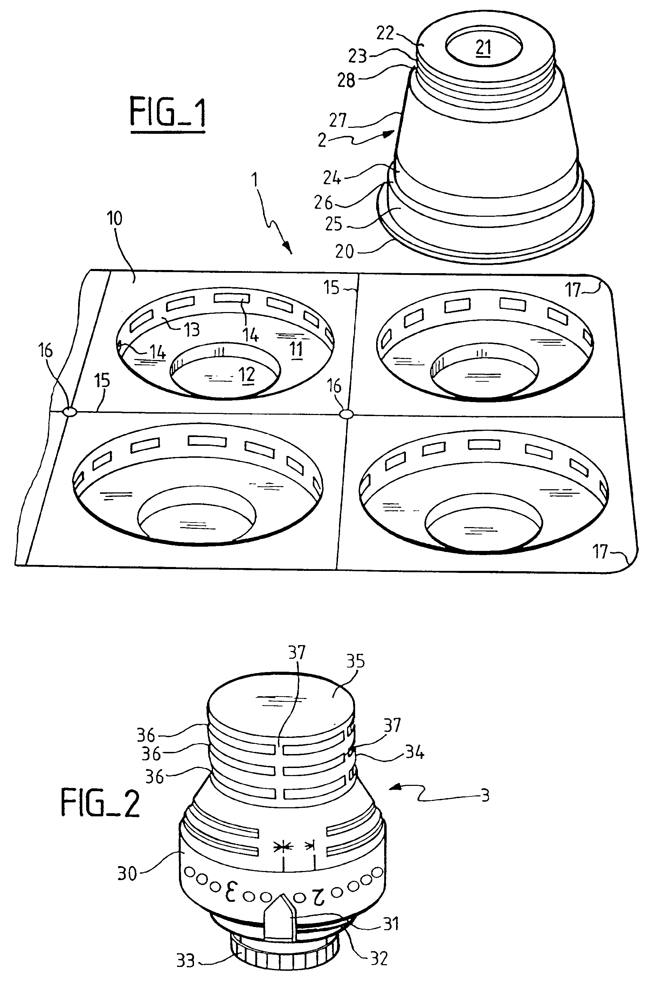

La figure 1 montre une forme de réalisation de l'invention constituée d'un plateau 1 comportant d'une part des emplacements de positionnement individuel pour des articles à emballer, notamment des articles de plomberie et plus précisément ici des articles de robinetterie tels que celui représenté sur la figure 2, emplacements matérialisés chacun par une région 10 présentant un creux 11, et d'autre part des coupelles 2 adaptées à être solidarisées dans la position retournée montrée sur la figure, de manière amovible, au plateau 1, aux emplacements de positionnement individuel, par la région de leur embouchure ; de la sorte, lorsque les coupelles 2 sont solidarisées au plateau 1, chaque emplacement de positionnement individuel de celui-ci délimite, en association avec l'une d'elles, un espace, et c'est cet espace qui, selon l'invention, est utilisé pour le logement d'un article 3 ; naturellement, le dispositif peut comporter autant de coupelles qu'il y a d'emplacements de positionnement individuel, ou un nombre de coupelles inférieur.

Comme le rôle de l'emplacement de positionnement est de permettre la solidarisation amovible de la coupelle, et éventuellement le maintien de l'article inclus dans l'espace destiné à le recevoir, il peut présenter un relief au lieu d'un creux 11, ou encore un ou plusieurs creux et/ou un ou plusieurs reliefs, en fonction de la forme de l'article. Ici, l'article 3 est une tête pour robinet thermostatique dont la forme extérieure est approximativement de révolution, destinée à être adapté à un radiateur à circulation de fluide pour en modifier le débit d'alimentation en fonction du niveau de température désiré, au moyen du robinet ; il comporte à cet effet une jupe 30 cylindrique comportant sur son pourtour une échelle graduée le long de laquelle peut être déplacé un index 31 porté par une bague 32 disposée partiellement à l'intérieur de la jupe, et, d'un côté de la jupe, un écrou 33 de forme générale cylindrique présentant un pourtour moleté de plus petit diamètre que la jupe et destiné à être vissé autour d'un filetage du robinet, tandis que de l'autre côté de la jupe, la tête comporte une cage 34 de forme générale cylindrique également de plus petit diamètre que la jupe et dans laquelle est logé l'élément thermostatique. Aussi, l'emplacement de positionnement comporte une région 10 présentant un creux 11 de forme générale approximativement cylindrique dont le diamètre est supérieur à celui de la jupe graduée, et coaxialement au fond de ce creux 11, un second creux 12, également de forme générale approximativement cylindrique, de diamètre inférieur à celui du premier mais légèremement plus grand que celui de l'écrou moleté 33 ; cette configuration permet de disposer la tête à l'emplacement de positionnement de telle sorte que son écrou moleté 33 repose dans le fond du second creux 12, ce qui le centre approximativement dans le premier creux 11, dont le pourtour s'étend à quelques millimètres de celui de la jupe 30.

Les dimensions intérieures de la coupelle 2 sont sensiblement supérieures aux dimensions extérieures de la tête, à quelques exceptions près qui seront mentionnées dans la suite.

De plus, comme la coupelle 2 et le plateau 1 doivent pouvoir être solidarisés de manière amovible lorsque la coupelle est en position retournée, les emplacements de positionnement individuel pour les articles et les embouchures des coupelles 2 présentent chacun des moyens de clipsage mutuel réversible, et le plateau et les coupelles sont en matériau souple ou à tout le moins semi-rigide et déformable élastiquement ; à cet effet, le pourtour du premier creux 11 de chaque emplacement de positionnement présente, sur sa face interne 13, des plots 14 en saillie de quelques fractions de millimètre vers le centre de ce premier creux 11 ; ces plots 14 sont répartis angulairement régulièrement le long de ce pourtour ; l'embouchure des coupelles présente une collerette extérieure 20 déformable élastiquement, dont le diamètre extérieur en l'absence de contrainte est de l'ordre du diamètre de la face interne 13 du pourtour du premier creux, et de toute manière supérieur à la distance entre les faces en regard des plots opposés ; la hauteur de la collerette 20 est inférieure à la distance qui sépare les plots 14 du fond du premier creux 11, et, bien entendu, le diamètre extérieur de la partie de la coupelle à laquelle se raccorde la collerette est inférieur à la distance entre les faces en regard des plots opposés. Ainsi, lorsque la coupelle est poussée à force vers le fond du premier creux 11, sa collerette 20 fléchit vers le haut sous l'effort exercé sur elle par les plots 14, et revient élastiquement à sa forme initiale lorsque les plots ont été franchis ; de la sorte, la coupelle est solidarisée au plateau 1 ; la désolidarisation de la coupelle par rapport au plateau est aisée si on commence par la basculer latéralement de manière à en dégager d'abord un côté de l'emprise des plots en faisant fléchir sa collerette vers le bas sous l'effort exercé sur elle par les plots, la collerette revenant ensuite élastiquement à sa forme initiale lorsque les plots ont été franchis.

Par ailleurs, il est utile que la forme de la coupelle soit adaptée à celle de l'article 3 à emballer, ici la tête thermostatique, pour pouvoir tirer parti de toutes les ressources de cet emballage.

Ainsi, lorsque la tête thermostatique est insérée à l'intérieur de la coupelle 2, de manière générale, la face interne de la paroi de la coupelle est à quelques millimètres de la tête, afin qu'en cas de choc, l'énergie de celui-ci soit absorbée autant que faire se peut par la déformation de la coupelle, et soit transmise à la tête en aussi petite quantité que possible. Néanmoins, il est nécessaire que quelques régions de cette face interne et de l'article soient en contact ou à proximité immédiate l'une de l'autre, pour rigidifier la coupelle 2 dans les zones désirées, pour solidariser de manière réversible l'article 3 et la coupelle, et pour faciliter la prise en main de l'ensemble coupelle-article lors de la solidarisation de la coupelle au plateau 1 et de la désolidarisation de ces deux pièces.

A cet effet, à l'opposé de son embouchure, la coupelle 2 présente un fond 21 approximativement plat dans sa partie centrale, entouré d'une dépression annulaire, de telle sorte que seule la partie centrale du cache terminal 35 du robinet soit en appui contre ce fond approximativement plat, ce qui entraîne qu'en cas de chute de la coupelle et de son contenu, fond contre le sol, ce soit la face extérieure en relief 22 de la dépression annulaire qui heurte celui-ci, et non la partie centrale 21 en contact avec le cache 35 ; de plus, comme la cage 34 pour l'élément thermostatique est de plus petit diamètre que la jupe 30, la coupelle 2 présente un diamètre plus petit autour de la cage qu'autour de la jupe, et à plus forte raison que celui de la collerette 20, et ainsi, en cas de chute latérale, c'est, avec la collerette, la face extérieure 22 de la dépression annulaire qui heurte le sol et non une partie de la coupelle en contact avec la cage 34 pour l'élément thermostatique.

En effet, la coupelle 2 épouse, sur une partie de sa longueur, la forme de cette cage 34, car la conformation de celle-ci est bien adaptée à un clipsage de solidarisation des deux pièces. Plus précisément, pour que l'élément thermostatique soit au contact de l'air ambiant, la cage 34 pour cet élément est une région extérieurement de forme générale cylindrique présentant, se succédant longitudinalement, des ouïes 36 s'étendant circonférentiellement le long de quatre arcs s'étendant eux-mêmes sur un peu moins de quatre-vingt-dix degrés et séparés l'un de l'autre par une nervure 37 de rigidification ; aussi, dans la région correspondante, la coupelle présente une forme générale approximativement cylindrique comportant une succession d'ondulations 23 s'étendant circonférentiellement et se succédant longitudinalement, avec un pas égal à celui de la succession des ouïes 36 de la cage 34 de la tête, de telle sorte que lorsque la partie centrale du cache terminal 35 de la cage est en appui contre le fond 21 de la coupelle, des ondulations 23 de celle-ci soient en relation d'engrènement réversible avec au moins une partie de la région de la cage 34 dans laquelle se succèdent les ouïes d'aération 36 de l'élément thermostatique ; comme on l'a vu, cette partie de la coupelle 2 ne vient pas en contact avec le sol lors d'une chute de la coupelle et de son contenu, sauf chute d'une brutalité exceptionnelle ; le désengrènement des deux pièces 2, 3 est aisé en exerçant une traction longitudinale de l'une par rapport à l'autre, grâce à l'élasticité de la matière constituant la coupelle.

Enfin, la coupelle épouse la forme de la tête sur une partie de la longueur de sa jupe graduée 30 présentant une forme générale cylindrique contre laquelle elle est en contact ou dont elle est proche par exemple de quelques dixièmes de millimètres ; cette région étant celle de plus grand diamètre de la tête, l'utilisateur y bénéficie d'une bonne prise en main pour serrer ces deux pièces l'une contre l'autre lorsqu'il désire solidariser l'ensemble coupelle-tête au plateau, et l'en désolidariser, confortée par le fait que la souplesse de la matière constituant la coupelle transmet les efforts exercés à la tête constituée d'une matière rigide. La région 24 de la coupelle qui épouse la forme de la jupe 30 de la tête est séparée de la collerette 20 par une région 25 également cylindrique de plus grand diamètre, dont la face interne est à plus grande distance de la région correspondante de la tête, et qui lui est raccordée par un bombement annulaire 26.

En résumé, la coupelle 2 présente, depuis son embouchure et en allant jusqu'à son fond 21, une collerette 20, une région de forme générale cylindrique 25 s'étendant à distance de la tête thermostatique, un bombement annulaire 26, une région 24 de contact avec la jupe 30 de la tête de forme générale cylindrique, une région 27 de raccordement de la région de contact 24 à une région de clipsage 28 de la coupelle avec la tête, cette région de raccordement 27 présentant par exemple une forme générale tronconique (ici deux troncs de cônes successifs de pentes différentes), la région de clipsage 28 comportant les ondulations 23, une région annulaire 22, en dépression côté face interne de la coupelle, donc formant bourrelet proéminent du côté face externe, et un fond 21 approximativement plat.

Afin que l'article soit visible à l'intérieur de l'emballage, la coupelle est réalisée en une matière transparente. Ici, cette caractéristique permet de voir en particulier l'échelle graduée de la jupe 30 de la tête thermostatique ; avantageusement, une bande portant des informations telles que la correspondance entre les chiffres de l'échelle graduée et les températures, ainsi que des conseils et recommandations en fonction des conditions d'utilisation (lieu d'utilisation, fonction désirée : hors-gel ou arrêt par exemple) sous la forme de pictogrammes, la désignation du produit dans plusieurs langues, la marque et la référence du produit, un code-barres, etc., peut être collée à la coupelle ; de préférence, cette bande est elle-même au moins partiellement transparente, avec des inscriptions teintées, et les chiffres de l'échelle graduée reportés sur la bande sont répartis pour pouvoir être mis en correspondance de ceux de la jupe de la tête. Eventuellement, l'espace entre l'article 3 et la coupelle 2 dans certaines régions, peut permettre l'insertion d'une notice de montage ou d'emploi, en perdant alors partiellement le bénéfice de la transparence de la coupelle 2.

Dans l'emballage représenté sur les dessins, les emplacements de positionnement individuel sont alignés dans deux directions perpendiculaires dans lesquelles ils s'étendent à égale distance l'un de l'autre ; un tel emballage peut ainsi comporter par exemple dix emplacements (donc dix coupelles) alignées sur deux lignes.

Cependant, afin de réduire l'encombrement de l'emballage, il est possible de prévoir que les emplacements de positionnement individuel soient disposés en quinconce ; il est également possible de prévoir que les coupelles de deux lignes voisines soient disposées tête-bêche, c'est-à-dire que les coupelles d'une ligne aient comme décrit précédemment, leur embouchure de grand diamètre solidarisée au plateau 1, et que celles de la ligne voisine ou des lignes voisines situées de part et d'autre, soient solidarisées également de manière amovible au plateau mais par leur fond, leur embouchure étant obturée par exemple par un bouchon amovible.

Selon une caractéristique de l'invention, l'emballage collectif qui vient d'être décrit est sécable de manière à pouvoir être divisé en emballage(s) individuel(s) ou/et emballage(s) collectif(s) de plus petite dimension ; à cette fin, les emplacements de positionnement individuels sont délimités par des régions 15 de moindre résistance mécanique ; ces régions de moindre résistance mécanique peuvent être par exemple des lignes rainées dans la surface du plateau 1 ; afin de faciliter la séparation des emballages individuels définis par les lignes rainées sécantes, le plateau peut être percé d'un trou 16 à chaque intersection de ces lignes.

Pour des raisons de sécurité, les angles du plateau peuvent être abattus, et le contour de celui-ci peut présenter des régions arrondies 17.

Le plateau 1 peut être en polystyrène, et les coupelles 2 en polypropylène, matériaux qui permettent de réaliser la structure décrite ci-dessus dans de bonnes conditions.

Grâce à cette structure (qui n'est pas limitée à la géométrie décrite ci-dessus), l'emballage (avec son contenu) est aisément entreposable (par superposition ou par accrochage si un trou est prévu dans le plateau), et transportable.

Tant qu'ils n'ont pas été retirés de leur coupelle de protection et/ou d'information individuelle, les articles sont protégés efficacement contre les chocs lors des chutes, contre les coups (par exemple dans les immeubles en construction), contre les projections d'eau, contre les poussières (de ponçage par exemple), et précisément la coupelle peut être maintenue sur l'article aussi longtemps qu'il est nécessaire, y compris lorsque l'article est monté sur l'appareil auquel il est destiné à être adapté, grâce au fait qu'elle est ouverte uniquement du côté de la région de montage de l'article sur cet appareil ; de plus, de la sorte, l'utilisateur final peut être mis en possession des instructions et conseils qui lui sont destinés et prendre connaissance de la marque du produit, lesquels sont mentionnés sur la bande intégrée à la coupelle.

Il faut noter que même si une coupelle et un article doivent être séparés tout d'abord de leurs semblables, ce qui est possible puisque le plateau est sécable, et ensuite momentanément l'un de l'autre, le déclipsage de la coupelle est aisé en la déformant élastiquement et en la serrant à la main contre l'article emballé (ici contre la jupe de la tête) en basculant l'ensemble, le retrait de l'article pouvant ensuite être effectué par traction, et il est facile de re-solidariser la coupelle à l'article pour à nouveau bénéficier des avantages mentionnés plus haut.

L'invention permet également, en fonction des matériaux choisis pour la fabrication de l'emballage, de ré-utiliser celui-ci par retour au fournisseur, de la recycler, ou de le traiter en emballage perdu si le matériau choisi est biodégradable.

Bien entendu, l'invention n'est pas limitée à la forme de réalisation décrite et représentée, et on pourra en prévoir d'autres formes sans sortir de son cadre tel que défini par les revendications.

## Revendications

1. Emballage pour articles de plomberie, du type comprenant d'une part un plateau comportant des emplacements de positionnement individuel pour les articles, et d'autre part des coupelles de protection destinées à recouvrir chacune un article et à être fixées sur le plateau aux emplacements de positionnement individuel des articles, caractérisé en ce que chaque emplacement de positionnement individuel d'un article (3) est matérialisé par un creux (11, 12), ménagé directement dans le plateau, de profil complémentaire de celui d'une extrémité de l'article, tandis que chaque coupelle (2) fixée par son embouchure sur le plateau (1) est tournée du côté opposé au creux de positionnement d'un article (3) et possède un profil complémentaire de celui de l'autre extrémité de l'article.

2. Emballage selon la revendication 1, caractérisé en ce que les emplacements de positionnement individuel pour les articles et la région de l'embouchure des coupelles (2) présentent chacun des moyens de clipsage mutuel réversible (14, 20).

3. Emballage selon la revendication 1, caractérisé en ce que les coupelles (2) présentent une région de clipsage réversible (28) de l'article de plomberie (3) en vue de conserver aussi longtemps que nécessaire la solidarisation entre la coupelle et l'article de plomberie.

4. Emballage selon la revendication 1, caractérisé en ce que les coupelles (2) présentent une région de serrage (24) contre au moins une partie (30) du pourtour de l'article de plomberie (3), au voisinage immédiat de cette partie du pourtour.

5. Emballage selon la revendication 1, caractérisé en ce que les coupelles (2) comportent au moins une partie transparente.

6. Emballage selon la revendication 1, caractérisé en ce que les coupelles (2) comportent une étiquette au moins partiellement transparente.

7. Emballage selon la revendication 1, caractérisé en ce que le plateau (1) comporte des régions de moindre résistance mécanique (15) délimitant chaque emplacement de positionnement individuel pour les articles (3) de telle sorte que le plateau soit sécable en emballages individuels constitués d'un emplacement de positionnement individuel associé à une coupelle (2).

8. Emballage selon la revendication 1, caractérisé en ce que la plateau (1) comporte des régions de moindre résistance mécanique délimitant les emplacements de positionnement individuels, sous la forme de lignes sécantes (15), et un trou (16) à chaque intersection entre ces lignes.

9. Emballage selon la revendication 1, caractérisé en ce que ses constituants sont d'une part un plateau (1) et d'autre part un groupe de coupelles (2), et au moins l'un de ces constituants est en matériau souple ou semi-rigide.

10. Emballage selon la revendication 1, caractérisé en ce que ses constituants sont d'une part un plateau (1) et d'autre part un groupe de coupelles (2), et au moins l'un de ces constituants est en matériau synthétique ou recyclable ou bio-dégradable.

11. Emballage selon la revendication 1, caractérisé en ce que le plateau (1) comporte des emplacements de positionnement individuel s'étendant dans deux directions perpendiculaires.

12. Emballage selon la revendication 1, caractérisé en ce que la plateau comporte des emplacements de positionnement individuel disposés en quinconce.

13. Emballage selon la revendication 1, caractérisé en ce qu'il comporte, en plus des coupelles (2) en position retournée, des coupelles en position normale de manière que les coupelles soient disposées tête-bêche.

14. Emballage selon la revendication 1, caractérisé en ce que le plateau (1) a un contour extérieur présentant des régions arrondies (17).

## Claims

1. Package for articles of plumbing, of the type comprising on the one hand a plate having individual positioning locations for the articles, and on the other hand protective cups, each designed to cover an article and to be attached to the plate in the individual positioning locations for the articles, characterized in that each individual positioning location for an article (3) is constructed of a hollow (11, 12), provided directly in the plate, having a complementary profile to that of one end of the article, whilst each cup (2) attached by its opening to the plate (1) is turned in the opposite direction to the hollow for positioning an article (3) and possesses a complementary profile to that of the other end of the article.

2. Package according to claim 1, characterized in that the individual positioning locations for the articles and the region of the openings of the cups (2) each have mutual reversible clipping means (14, 20).

3. Package according to claim 1, characterized in that the cups (2) have a reversible clipping region (28) for the article of plumbing (3) with a view to preserving as long as necessary the interlocking between the cup and the article of plumbing.

4. Package according to claim 1, characterized in that the cups (2) have a region (24) for clamping against at least one part (30) of the periphery of the article of plumbing (3), in the immediate vicinity of this part of the periphery.

5. Package according to claim 1, characterized in that the cups (2) include at least one transparent part.

6. Package according to claim 1, characterized in that the cups (2) include a label which is at least partially transparent.

7. Package according to claim 1, characterized in that the plate (1) includes regions of lower mechanical strength (15) delimiting each individual positioning location for the articles (3) so that the plate is sealable in individual packages consisting of an individual positioning location associated with a cup (2).

8. Package according to claim 1, characterized in that the plate (1) includes regions of lower mechanical strength delimiting individual positioning locations, in the form of secant lines (15), and a hole (16) at each intersection between these lines.

9. Package according to claim 1, characterized in that its constituents are on the one hand a plate (1) and on the other hand a group of cups (2), and at least one of these constituents is made of a flexible or semi-rigid material.

10. Package according to claim 1, characterized in that its constituents are on the one hand a plate (1) and on the other hand a group of cups (2), and at least one of these constituents is made of a synthetic or recyclable or biodegradable material.

11. Package according to claim 1, characterized in that the plate (1) includes individual positioning locations extending in two perpendicular directions.

12. Package according to claim 1, characterized in that the plate includes individual positioning locations in a staggered arrangement.

13. Package according to claim 1, characterized in that it includes, in addition to the cups (2) in the inverted position, cups in the normal position so that the cups are arranged head-to-tail.

14. Package according to claim 1, characterized in that the plate (1) has an outer contour having rounded regions (17).

## Patentansprüche

1. Verpackung für Klempnerartikel vom Typ umfassend einerseits eine Einzelaufstellplätze für die Artikel umfassende Platte, und andererseits Schutzbecher, die dazu ausgelegt sind, jeweils einen Artikel abzudecken und auf der Platte an den Einzelaufstellplätzen der Artikel befestigt zu sein, **dadurch gekennzeichnet**, daß jeder Einzelaufstellplatz eines Artikels (3) durch eine direkt in der Platte vorgesehene Vertiefung (11, 12) mit einem Profil gebildet ist, das komplementär zu jenem eines Endes des Artikels ist, wohingegen jeder an seiner Mündung auf der Platte (1) befestigte Becher (2) auf der der Aufstellvertiefung eines Artikels (3) entgegengesetzten Seite angeordnet ist und ein Profil besitzt, das komplementär zu jenem des anderen Endes des Artikels ist.

2. Verpackung nach Anspruch 1, **dadurch gekennzeichnet**, daß die Einzelaufstellplätze für die Artikel und der Mündungsbereich der Becher (2) jeweils Mittel zum gegenseitigen reversiblen Einschnappen (14, 20) aufweisen.

3. Verpackung nach Anspruch 1, **dadurch gekennzeichnet**, daß die Becher (2) einen Bereich zum reversiblen Einschnappen (28) des Klempnerartikels (3) aufweisen, um die Verbindung zwischen dem Becher und dem Klempnerartikel so lange wie nötig beizubehalten.

4. Verpackung nach Anspruch 1, **dadurch gekennzeichnet**, daß die Becher (2) einen Bereich zum Drücken (24) gegen wenigstens einen Teil (30) des Umfangs des Klempnerartikels (3) in unmittelbarer Nähe dieses Teils des Umfangs aufweisen.

5. Verpackung nach Anspruch 1, **dadurch gekennzeichnet**, daß die Becher (2) wenigstens einen transparenten Teil umfassen.

6. Verpackung nach Anspruch 1, **dadurch gekennzeichnet**, daß die Becher (2) ein wenigstens teilweise transparentes Etikett umfassen.

7. Verpackung nach Anspruch 1, **dadurch gekennzeichnet**, daß die Platte (1) Bereiche mit geringerer mechanischer Festigkeit (15) umfaßt, die jeden Einzelaufstellplatz für die Artikel (3) derart begrenzen, daß die Platte in Einzelverpackungen teilbar ist, welche aus einem einem Becher (2) zugeordneten Einzelaufstellplatz gebildet sind.

8. Verpackung nach Anspruch 1, **dadurch gekennzeichnet**, daß die Platte (1) die Einzelaufstellplätze begrenzende Bereiche mit geringerer mechanischer Festigkeit in Form von Trennlinien (15) und ein Loch (16) an jedem Schnittpunkt zwischen diesen Linien aufweist.

9. Verpackung nach Anspruch 1, **dadurch gekennzeichnet**, daß ihre Bestandteile einerseits eine Platte (1) und andererseits eine Gruppe von Bechern (2) sind, und daß wenigstens eines dieser Bestandteile aus weichem oder halbstarrem Material gefertigt ist.

10. Verpackung nach Anspruch 1, **dadurch gekennzeichnet**, daß ihre Bestandteile einerseits eine Platte (1) und andererseits eine Gruppe von Bechern (2) sind, und daß wenigstens eines dieser Bestandteile aus Kunststoff oder einem wiederverwertbaren oder biologisch abbaubaren Material gefertigt ist.

11. Verpackung nach Anspruch 1, **dadurch gekennzeichnet**, daß die Platte (1) sich in zwei orthogonalen Richtungen erstreckende Einzelaufstellplätze umfaßt.

12. Verpackung nach Anspruch 1, **dadurch gekennzeichnet**, daß die Platte Einzelaufstellplätze in Quincunxanordnung umfaßt.

13. Verpackung nach Anspruch 1, **dadurch gekennzeichnet**, daß sie zusätzlich zu den Bechern (2) in umgedrehter Stellung Becher in normaler Stellung derart umfaßt, daß die Becher Kopf bei Fuß angeordnet sind.

14. Verpackung nach Anspruch 1, **dadurch gekennzeichnet**, daß die Platte (1) eine abgerundete Bereiche (17) aufweisende Außenkontur besitzt.
